# EUROPEAN PATENT APPLICATION

(11) **EP 3 432 244 A1**
(43) Date of publication of application: **23.01.2019**
(21) Application number: 18184644.5
(22) Date of filing: 20.07.2018
(51) Int. Cl.: G06Q 30/02, H04L 29/08, H04L 29/06

(54) **ANTI ADBLOCK SOLUTION VPAID**

(30) Priority: 20.07.2017 DE 102017116432
(71) Applicant: Glomex GmbH, 80339 München (DE)
(72) Inventor: Matzanke, Martin, 82256 Fürstenfeldbruck (DE); Nowak, Maria, 81927 München (DE); Stojakovic, Sascha, 83093 Bad Endorf (DE)
(74) Representative: Herrmann, Uwe

(57) **Abstract**

The invention pertains to a system, a method and a computer program for displaying an ad in the presence of an ad blocker.

## Description

Visual ads and audio-visual ads delivered to the user via a web browser are the primary way of monetization for many websites.

Ad delivery relies on build-in browser functionality. Browser functionality can be modified by browser extensions. Ad blocker browser extensions such as Adblock Plus have the specific purpose of interfering with ad delivery and displaying of ads.

We claim that we can deliver ads with qualities defined below (i.e. rely on javascript) even in the presence of an ad blocker.

The proposed technique relies on modifying existing browser functions in a way that it allows to circumvent currently available ad blockers while still maintaining the initially intended functionality of these browser functions. Thus, advertisers are not required to change their ad implementation. Both old and new ads can be delivered to the users without prior knowledge of the solutions proposed in this document.

While the technique presented here is applicable to all kinds of ads, we specifically focus on a solution to deliver javascript VPAID (Video Player-Ad Interface Definition) ads in the presence of an ad blocker.

The main techniques of hindering ad delivery in a web browser are
a) Modifying the DOM (document object model) in the browser
b) Preventing requests to ad servers
c) Injecting javascript into the site

The last mentioned technique c) of injecting javascript into the site is considered to be very unreliable and is only rarely used by ad blockers. While the present solution is also applicable to the case of c), the majority of ad blocking relies on techniques a) and b) and thus, the present solution focuses on those. Ad blocking by DOM modification and by preventing requests to ad servers are detailed below.

The DOM (document object model) is the representation of a web site to the browser. DOM elements are configured with attributes like "class", "id" and others. These attributes detail the way the browser represents these elements on the screen. Typically, the "class" and "id" are humanly readable and thus hint to their purpose: e.g. the "class" could be "ad-banner-top" or something similar. Attributes known to be used for displaying ads are included in the filter lists used by ad blockers. When a filter list contains the "id" or "class" attributed to a specific DOM element, the ad blocker removes this DOM element from the visible screen area by various techniques (e.g. removing the element or setting it to a non-visible sate).

The present solution aims to obscure the purpose of DOM elements to the ad blocker, thus denying a way to block these elements from visibility.

The display of ads relies on resources like images, audio files, styling files, video files, javascript files and possibly others. The loading of these resources is executed by the browser via requests to the servers hosting these files. File locations are part of the ad description. The browser provides an API to browser extensions to modify and even deny these requests. Typically, files used for displaying ads are hosted on servers easily identifiable as ad servers (e.g. "double-click" servers owned by google). Ad Blockers are provided a list of all known ad servers and ad resources and can prevent the execution of these requests.

The present invention can prevent the major techniques used by Ad Blockers (see above for description of major techniques) to allow unhindered ad delivery for all ads relying on javascript for ad delivery.

The techniques described in this document are applicable to all currently known javascript functionality in the browser and can be extended to future functionality.

All modifications to the browser's functionality are implemented in a way that the intended purpose of the functionality is maintained, especially in the context of ad delivery. Thus agencies supplying ads are not required in any way to make changes to existing infrastructure, existing ads. Ads can be designed without taking into account techniques of "unblocking" them.

The technique will be applied to and further detailed in the context of VPAID javascript ads that are running in an isolated browser context (i.e. iframe). The technique can be extended to the whole browser context and can thus be applied to all ads relying on javascript.

VPAID javascript ads are well known in the art and can extend to other versions based and derived from the standards defined in the art. Corresponding disclosure is made in https://www.iab.com/guidelines/digital-video-player-ad-interface-definition-vpaid-2-0/.

A VPAID javascript ad is typically delivered in a VAST xml file and both past and future iterations of this IAB standard, as is also well known in the art. Corresponding disclosure is made in https://www.iab.com/guidelines/digital-video-ad-serving-template-vast-4-0/.

The VAST xml is loaded by a request to an ad server. The VAST xml details additional requests. The additional requests are typically intended to request additional resources required for ad display or are used for tracking purposes as defined by the IAB standard. All these requests can be blocked by ad blocking browser extensions.

The VPAID javascript file to load is detailed by the VAST xml as defined by the IAB standard. This VPAID javascript is intended to produce DOM elements that make up the actual ad to be displayed to the user. The javascript VPAID can also re-use existing DOM elements (for example an existing video player).

Ads in VAST files are serving the purpose of being displayed before, during or after a video. This focuses on ads delivered in this context.

Typically a website dynamically requests resources required for ad display. "Dynamically" means in this context that the website owner does not have full control over all the involved ad servers after the first request has been made. The first request to an ad server is implemented on the web site directly and is thus known to the site owner. The response of this first request can detail additional ad servers that will be requested accordingly. This grants the advantage of tailoring ads to specific users. But it also takes control away from the site owner in the sense that users browsing the web site request ad content from servers that are unknown to the site owner. This has the consequence that the web sites functionality typically has to serve its intended purpose (i.e. the display of content) even if communication with the ad servers is not possible for either technical or other reasons.

For the proposed solution, a mechanism to load initially blocked resources is introduced.

This is done by introducing a unified server side service that grants access to all resources required for ad delivery i.e. displaying the ad. This single server removes the dynamic nature of dealing with unknown ad servers while still being able to proxy requests to these servers. While requests to this single server can still be blocked by ad blocking techniques, it remains for the site owner to simply control if communication to this ad server is possible. If communication is blocked, the web site can decide to stop displaying the desired web site's content as well. This unified server will henceforth be called a "proxy ad server".

In the context of javascript VPAID ad, this means that the displaying of the content video only takes place if communication with the proxy ad server is unhindered. Such a proxy ad server is already used and detailed in the art, as detailed in EP3016054A1.

The proxy ad server needs to offer two main functions to allow ad display in the context of VPAID javascript ads (as well as other display ads):
a) It needs to allow proxying of any resource. If a file is hosted on a third party server (e.g. ad server), the proxy ad server will be supplied the url via means undetectable by ad blocking technology. This can take place by encoding the URI and by sending the encoded URI via websocket. This encoded URI is then decoded by the ad proxy server. The resource specified by the URI is then queried from the server (where no interference of ad blocking technology is possible). The acquired resource is then encoded and returned via websocket to the web browser, where decoding takes place.
b) While in principle the solution described in a) allows to query any resource, some resources can only be handled correctly by the browser if they are loaded via the intended protocol (e.g. http or https) instead of websocket. Also, the overhead of a websocket operation can be very costly in case of some files (e.g. video files and large images). For this purpose, the ad proxy server supplies functionality to upload any kind of resource to a location that either is or functions similar to a content delivery network (CDN). While access to this location can be blocked by ad blockers as well, it again is a single location that can be controlled. Should this single location be blocked, the display of the desired (video) content can be blocked as well.

The general techniques of executing requests to servers that are blocked by ad blockers are detailed above. A detailed description of applying this and other contexts to VPAID javascript ads (and other javascript ads) follows here.

The complexity of unblocking (i.e. displaying despite the presence of an ad blocker) an ad based on a VAST xml containing a VPAID javascript exceeds the complexity of displaying VAST with video instream ads, as covered in EP3016054A1. The complexity arises from the nature of VPAID being able to load any kind of additional resource (e.g. scripts, images, videos, ...) and it being able to manipulate the DOM structure. The dynamic allocation of these additional resources requires a new approach in circumventing ad blockers.

The entry point for a VPAID ad is a VAST xml, as defined by the IAB standard. A VAST xml file (e.g. a VAST.xml feedback) is loaded even in the presence of an ad blocker by the means described above and in EP3016054A1, hereafter referred to as (1). While the ad delivery described in (1) only covers video files, the extended solution described here will extend to JavaScript files that can dynamically allocate any resource required for ad delivery. The solution described here also extends to ad blocking methods relying on modification of the DOM structure as detailed above. For an example VPAID see the appendix.

VAST handling is typically done by a javascript component that is part of a video player. This component is typically given the URI pointing to a VAST xml. The component fetches the VAST and follows the behaviour as defined by the IAB standard. This component will be henceforth referred to as "vast-ad-handler".

The vast-ad-handler has to perform all requests relating to VAST handling, including (but not limited to):
- Fetching of the VAST
- Fetching of additional VAST files as foreseen by so-called "wrapper" VASTs defined by the IAB standard
- Requesting tracking, error, survey and other calls typically referred to as "tracking calls" and well defined in the IAB standard

All these requests as well as the subsequent media file handling in the case of non-VPAID ads will be subject to the mechanism detailed both above and in (1).

After the VAST xml pointing to a VPAID javascript ad has been fetched (as detailed in the previous section), an iframe DOM element is created for the VPAID javascript to be executed in. This iframe provides an isolated context for the VPAID javascript, for example to ensure that the VPAID javascript is not interfering with other elements on the site. This behaviour is foreseen by the IAB standard.

This iframe is subject to modifications intended to circumvent ad blockers.

The VPAID javascript will be executed in this isolated iframe. The VPAID javascript will utilize browser functionality to both modify the DOM and load additional resources. Both the DOM modification as well as the loading of resources (including the loading of the VPAID javascript itself) can be subject to the ad blocking techniques detailed above. Both these ad blocking techniques will be circumvented.

The circumventing of the blocking of additional resources is performed as follows:
Resource loading is performed by various browser javascript functions. These include (but are not limited to):
- createElement
- New Image
- Background url
- Xhr request
- Inline
- Fetch

Within the iframe, all these functions and constructors are replaced by "proxy functions" of "proxy constructors". This can be done by overwriting the functions and constructors as intended in javascript.

This "proxy functionality" has the following properties:
- They have the same API as the functions they overwrite
- They serve the same purpose, e.g. they still create an image element or fetch a resource
- The actual loading of the resource in done in a way that current ad blocking techniques can not interfere with it, i.e. they follow the functionality described above.

Example for a createElement and getElementByld constructor:

```
 const nativeCreateElement = document.createElement;
 const idMapping = {};
 function generateld(setld) {
 } return Math.random().toString(36).substring(7);
 const nativeCreateElement = document.createElement;
 document.createElement = function(type) {
 if (type === 'div') {
  const divNode = nativeCreateElement('div');
  let divld;
  Object.defineProperty(div, 'id', {
     set(setld) {
      divld = generateld(setld);
      idMapping[id] = {
       id: divld,
       element: divNode
     }, };
     get() {
      return divld;
     }
    });
  return divNode; }
 return nativeCreateElement(type);
 };
 const nativeGetElementByld = document.getElementByld;
 document.getElementByld = function(elementld) {
 const item = Object.keys(idMapping).find(id => id === idMapping[id].id);
 if (!item) {
 }; } return nativeGelElementByld(elementld);
 return item.element
 const divNode = document.createElement('div');
 divNode.id = 'vpaid-ad-container';
 const vpaidNode = document.getElementByld('vpaid-ad-container');
 Example for a "proxy constructor":
 /* eslint-disable no-param-reassign */
 export default (global, performFetch) => {
 const Nativelmage = global.Image;
 global.Image = function Image(src) {
  const image = new Nativelmage(src);
  if (src) {
    performFetch(src).then((error) => {
     if (error && image.onerror) {
     } image.onerror(error);
    });
  } else {
    Object.defineProperty(image, 'src', {
     set(setSrc) {
      performFetch(setSrc).then(() => {
      }).catch((error) => {
        image.onerror(error);
      });
     },
     get() {
     },
    });
  }
  }; }; return image;
```

DOM elements created and modified by a VPAID javascript are subject to the blocking techniques described above. This blocking is based on properties on individual DOM nodes, e.g. the "class" or "id" attribute.

The attribute properties of a DOM node serve a variety of purposes:
- They are used for styling (css classes)
- They are used for traversing the DOM via built in browser functionality to
   - Manipulate the DOM
   - Query information contained in the DOM node

Using a DOM node for the purpose of displaying ads has thus to be obscured to an ad blocker. All property values (e.g. "banner-top", "ad-container") belonging to properties typically considered in ad blocking cases (e.g. "class", "id") have to be modified.

To achieve this, all javascript functions dealing with DOM modification and DOM traversing supplied by the browser have to be overwritten, while still maintaining their intended behaviour. The general approach is as detailed in the previous section.

These functions include (but are not limited to):
- getElementByld
- getElementsByClassName
- object.setAttribute()

The behavior of functions setting an attribute (e.g. setAttribute()) have to be modified in such a way that the obscured value that is actually set can be derived from the intended un-obscured value. This is done via a hashing algorithm and an internal table mapping from the original values to the hashed values.

As an example, the function element.setAttribute() is overwritten. The original function is copied to element.originalSetAttribute() and thus preserved. Using the overwritten browser function with some arguments, e.g. element.setAttribute('id', 'banner-top') would internally call the original function (proxying the function call to the original method) while modifying the arguments, for example to element.originalSetAttribute('id', '9d5f06927fe0a9ac06064ac166e549f0').

This also means that the function document.getElementByld() has to be overwritten in the same way, exchanging the arguments to the hashed values when forwarding to the original function.

CSS files detail the visual representation of DOM elements. CSS style sheets are interpreted by the browser, the browser applies the detailed styles according to the classes the elements have.

Since all class names have been modified as described in the previous section, all CSS styling sheets have to be modified accordingly. This modification takes place on the server side, i.e. the proxy-ad-server.

If a javascript creates a new browser context within the iframe (i.e. creating nested iframes), they will also be affected by the proxy functions defined above by applying the proxy functions recursively to all nested iframes.

With all the modifications in place, a script tag is produced in the modified iframe. For this script tag, the source attribute "src" is set to the VPAID javascript and hence the VPAID javascript is executed in the Modified iframe.

While the loading of this javascript could be blocked by an ad blocker would it be loaded without the modifications in place, the proxy-functions ensure the loading of the javascript as well as the loading of all additional resources triggered by this javascript.

When delivering the files via the proxy, cookies are set which are stored in an alternative AdBlocking-Cookie-Store. This is needed because a user should be identified in the case of an additional request towards 3rd parties. Thereby, the standard functionality is secured.

When delivering big files via the CDN (Images/Videos) no cookie is transferred, because it is assumed that for these resources a user needs not to be identified.

The ad is displayed without the ad blocker being able to interfere.

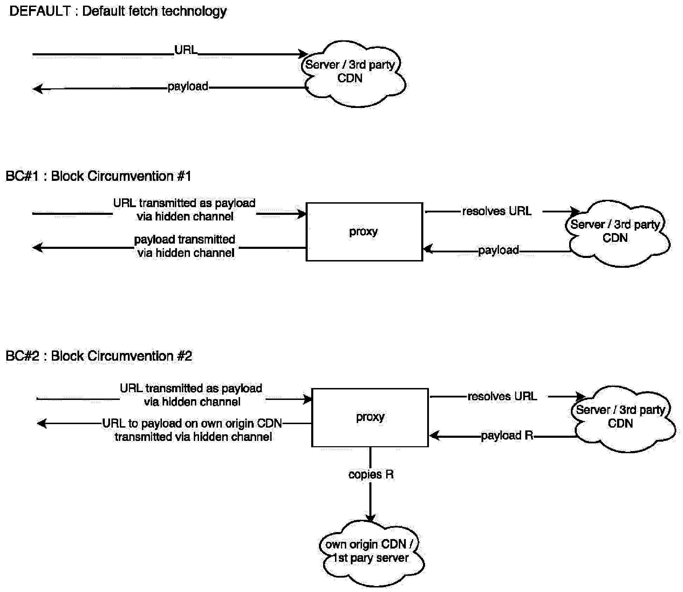

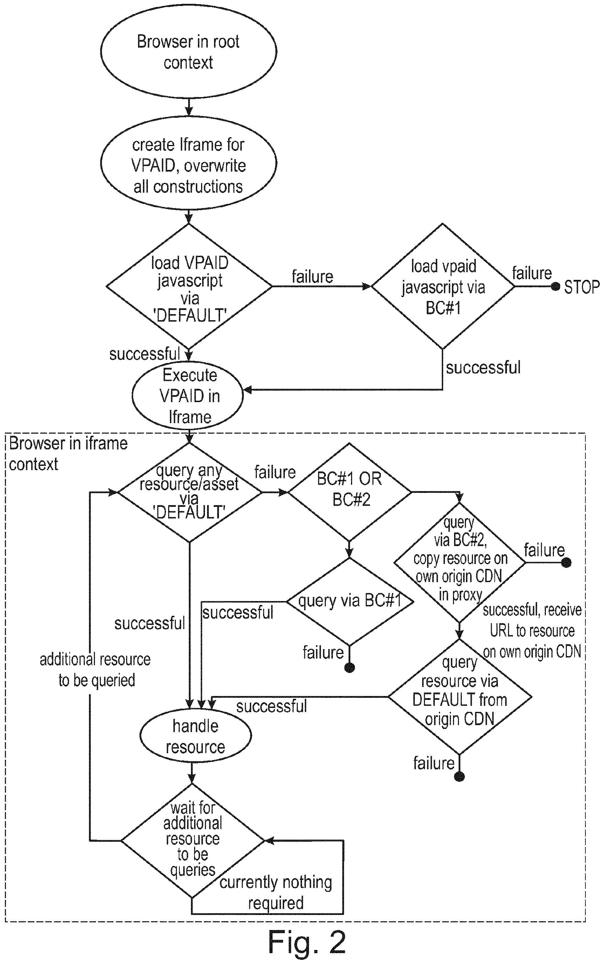

Figures 1 and 2 visualise the above described invention.

## Claims

1. System for displaying an ad in the presence of an ad blocker, comprising a proxy ad server granting access to all resources required for ad delivery, whereby the url of a file hosted on a third party server is encoded and sent via websocket or an intended protocol to the proxy ad server, whereby the url is then decoded by the proxy ad server, whereby the resource specified by the url is then queried from the proxy ad server and the required resource is then encoded and returned via websocket or an intended protocol to a web browser.

2. System according to claim 1, whereby the proxy ad server supplies functionality to upload any kind of resources to a location that either is or function similar to a content delivery network.

3. System according to claim 1, comprising a feature for loading initially blocked resources.

4. Method for displaying an ad in the presence of an ad blocker, comprising a proxy ad server granting access to all resources required for ad delivery, whereby the url of a file hosted on a third party server is encoded and sent via websocket or an intended protocol to the proxy ad server, whereby the url is then decoded by the proxy ad server, whereby the resource specified by the url is then queried from the proxy ad server and the required resource is then encoded and returned via websocket or an intended protocol to a web browser.

5. Method according to claim 4, whereby the proxy ad server supplies functionality to upload any kind of resources to a location that either is or function similar to a content delivery network.

6. Method according to claim 4, comprising a feature for loading initially blocked recources.

7. Computer program for displaying an ad in the presence of an ad blocker, comprising a proxy ad server granting access to all recources required for ad delivery, whereby the url of a file hosted on a third party server is encoded and sent via websocket or an intended protocol to the proxy ad server, wherey the url is then decoded by the proxy ad server, whereby the resource specified by the url is then queried from the proxy ad server and the required resource is then encoded and returned via websocket or an intended protocol to a web brower.

8. Computer program according to claim 7, whereby the proxy ad server supplies functionality to upload any kind of resources to a location that either is or function similar to a content delivery network.

9. Computer program according to claim 7, comprising a feature for loading initially blocked recources.
